# EUROPEAN PATENT APPLICATION

(11) **EP 4 734 213 A1**
(43) Date of publication of application: **29.04.2026**
(21) Application number: 25762431.2
(22) Date of filing: 28.02.2025
(51) Int. Cl.: H01M 10/0567, H01M 10/42, H01M 10/052, H01M 4/36, H01M 4/38, H01M 4/134

(54) **ELECTROLYTE FOR LITHIUM-SULFUR BATTERY**

(30) Priority: 29.02.2024 KR 20240030251
(71) Applicant: LG Energy Solution, Ltd., Seoul 07335 (KR); Samyang Corporation, Jongno-gu Seoul 03129 (KR)
(72) Inventor: KWACK, Ho-Beom, Daejeon 34122 (KR); PARK, Seong-Hyo, Daejeon 34122 (KR); LEE, Chang-Hoon, Daejeon 34122 (KR); CHOI, You-Ri, Daejeon 34122 (KR); AN, Jungmin, Daejeon 34011 (KR); KIM, Ilwha, Daejeon 34055 (KR); CHANG, Minjung, Bucheon-si, Gyeonggi-do 14472 (KR); LEE, Wonjung, Daejeon 34127 (KR); LEE, Chiwan, Daejeon 34127 (KR)
(74) Representative: Goddar, Heinz J.
(86) International application number: PCT/KR2025/002853
(87) International publication number: WO 2025/183516

(57) **Abstract**

The present disclosure relates to an electrolyte for use in a lithium-sulfur battery, including a non-aqueous solvent, a first lithium salt, a second lithium salt, an inorganic nitrate and an organic nitrate, wherein the non-aqueous solvent includes an acyclic ether and a conjugated heterocyclic compound, to improve Coulombic efficiency and life of the lithium-sulfur battery.

## Description

### TECHNICAL FIELD

The present disclosure relates to an electrolyte that may be used in a lithium-sulfur battery.

This application is based on and claims priority from Korean Patent Application No. 2024-0030251 filed on February 29, 2024 with the Korean Intellectual Property Office, the disclosure of which is incorporated herein in its entirety by reference.

### BACKGROUND

As lithium secondary batteries are used in a wide range of applications including not only portable electronic devices but also electric vehicles (EV) and energy storage systems (ESS), there is an increasing demand for lithium secondary batteries with higher capacity, higher energy density and longer life.

Among lithium secondary batteries, lithium-sulfur batteries are a battery system using a sulfur-based material containing a sulfur-sulfur bond as a positive electrode active material, and a lithium metal, a carbon-based material in which intercalation/deintercalation of lithium ions takes place, or silicon or tin that forms an alloy with lithium as a negative electrode active material.

In lithium-sulfur batteries, the theoretical specific capacity based on conversion reaction (S₈ +16Li⁺ +16e⁻ → 8Li₂S) between lithium ions and sulfur in the positive electrode amounts to 1,675 mAh/g, and when lithium metal is used as the negative electrode, the theoretical energy density is 2,600 Wh/kg. Because this value is higher than the theoretical energy density of other battery systems currently being studied (Ni-MH battery: 450 Wh/kg, Li-FeS battery: 480 Wh/kg, Li-MnO₂ battery: 1,000 Wh/kg, Na-S battery: 800 Wh/kg) and lithium ion batteries (250 Wh/kg), lithium-sulfur batteries are gaining attention as a high-capacity, eco-friendly and low-cost lithium secondary battery among secondary batteries developed so far.

However, during charging of lithium-sulfur batteries, lithium ions may be reduced into lithium metal on solid electrolyte interphase (SEI) surface at the negative electrode to form uneven structures on the negative electrode surface, causing uneven resistance distribution. Eventually, lithium deposits unevenly to form dendrites and inactive lithium over repeated charge and discharge.

The dendrites are the major cause of separator damage and short circuits, and in these circumstances, many studies have been made to design uniform lithium ion stripping and lithium plating on the negative electrode surface of lithium-sulfur batteries.

Furthermore, in the charge and discharge process of lithium-sulfur batteries, the release of polysulfide from the positive electrode occur during the first discharge (~2.3V), and the deposition of the eluted polysulfide on the positive electrode occurs during the second discharge (~2.1V), causing reductions in Coulombic efficiency and lifespan. Accordingly, studies have been made to adjust the amount of polysulfide that dissolves and is eluted in the electrolyte by using a non-solvent for polysulfide in order to extend the life of lithium-sulfur batteries.

### DISCLOSURE

### Technical Problem

To solve the above-described problems, the present disclosure is directed to providing an electrolyte of a new composition for suppressing and preventing the growth of lithium dendrites on a negative electrode and controlling the solubility of polysulfide.

Specifically, the present disclosure is directed to providing an electrolyte of a new composition that is advantageous in forming a solid electrolyte interphase to suppress and prevent the growth of lithium dendrites on negative electrode surface. The present disclosure is further directed to providing an electrolyte for achieving long-term operation of a lithium-sulfur battery by adjusting the amount of polysulfide that is released from a positive electrode and eluted in the electrolyte.

The present disclosure is further directed to providing a lithium-sulfur battery with improved battery life and Coulombic efficiency.

### Technical Solution

To achieve the above-described objective,
according to an aspect of the present disclosure, there is provided an electrolyte for a lithium-sulfur battery of the following embodiments.

The electrolyte according to a first embodiment includes:
a non-aqueous solvent, a first lithium salt, a second lithium salt, an inorganic nitrate and an organic nitrate, wherein the non-aqueous solvent includes an acyclic ether and a conjugated heterocyclic compound.

According to a second embodiment, in the first embodiment,
the inorganic nitrate may include a monovalent nitrate, and the organic nitrate may include a divalent nitrate.

According to a third embodiment, in the first or second embodiment,
the organic nitrate may include isosorbide dinitrate, 2,2,3,3-tetrafluorobutane-1,4-diol dinitrate, triethylene glycol dinitrate or a mixture thereof.

According to a fourth embodiment, in any one of the first to third embodiments,
the inorganic nitrate may include lithium nitrate (LiNO₃).

According to a fifth embodiment, in any one of the first to fourth embodiments,
the organic nitrate may be included in an amount that is equal to or smaller than a weight of the inorganic nitrate.

According to a sixth embodiment, in any one of the first to fifth embodiments,
the acyclic ether may be included in an amount of 70 vol% or more based on a total volume of the non-aqueous solvent.

According to a seventh embodiment, in any one of the first to sixth embodiments,
the first lithium salt may include a fluorine-containing inorganic lithium salt, and the second lithium salt may include a fluorine-containing organic lithium salt.

According to an eighth embodiment, in any one of the first to seventh embodiments,
a total concentration of the first lithium salt and the second lithium salt may be equal to or less than 0.50 M.

According to a ninth embodiment, in any one of the first to eighth embodiments,
a molar concentration ratio of the first lithium salt and the second lithium salt may range from 1:1 to 2:1.

According to another aspect of the present disclosure, there is provided a lithium-sulfur battery of the following embodiments.

The lithium-sulfur battery according to a tenth embodiment includes:
the electrolyte for the lithium-sulfur battery according to any one of the first to ninth embodiments, a positive electrode, a negative electrode, a separator between the negative electrode and the positive electrode and a battery case, wherein the positive electrode includes a sulfur-based compound containing a sulfur (S)-sulfur (S) bond as an active material, and wherein the negative electrode includes a lithium metal layer.

According to an eleventh embodiment, in the tenth embodiment,
the active material of the positive electrode may include a sulfur-carbon composite in which the sulfur-based compound is loaded into at least one of an outer surface of a porous carbon material and an inside of pores of the porous carbon material.

According to a twelfth embodiment, in the tenth or eleventh embodiment,
the lithium metal layer may include a lithium metal (Li) foil or a lithium alloy foil.

According to a thirteenth embodiment, in any one of the tenth to twelfth embodiments,
the negative electrode may include the lithium metal layer and a solid electrolyte interphase (SEI) on the lithium metal layer, and the solid electrolyte interphase may contain nitrogen (N).

According to a fourteenth embodiment, in any one of the tenth to thirteenth embodiments,
the lithium-sulfur battery may include a coin-type battery, a pouch-type battery or a cylindrical battery.

### Advantageous Effects

According to an aspect, the electrolyte of the present disclosure may have an advantageous effect on forming a solid electrolyte interphase, to be specific, an inorganic all-solid-state material-based single-ion conducting thin layer on the negative electrode surface. Through this, the electrolyte of the present disclosure may have an effect of suppressing and preventing the growth of lithium dendrites on the negative electrode surface during charging and discharging of lithium-sulfur batteries.

Further, the electrolyte of the present disclosure may have an effect of suppressing the elution of polysulfide from the positive electrode into the electrolyte.

Through this, using the electrolyte of the present disclosure, lithium-sulfur batteries with improved life and Coulombic efficiency may be provided.

### BRIEF DESCRIPTION OF THE DRAWINGS

FIG. 1 shows the results of specific capacity evaluation over repeated charge and discharge cycles in lithium-sulfur batteries manufactured using electrolytes of Comparative Preparation Example 1 and Preparation Example 1 in the present disclosure.
FIG. 2 shows the results of Coulombic efficiency evaluation over repeated charge and discharge cycles in lithium-sulfur batteries manufactured using electrolytes of Comparative Preparation Example 1 and Preparation Example 1 in the present disclosure.
FIG. 3 shows the results of first discharge capacity evaluation during a formation process of lithium-sulfur batteries manufactured using electrolytes of Comparative Preparation Example 1 and Preparation Example 1 in the present disclosure.
FIG. 4 shows the results of discharge capacity evaluation during first discharge at 0.3C after a formation process of lithium-sulfur batteries manufactured using electrolytes of Comparative Preparation Example 1 and Preparation Example 1 in the present disclosure.
FIG. 5 shows the results of specific capacity evaluation over repeated charge and discharge cycles in lithium-sulfur batteries manufactured using electrolytes of Comparative Example 1, Example 1, Example 2 and Example 3 in the present disclosure.
FIG. 6 shows the results of energy density evaluation over repeated charge and discharge cycles in lithium-sulfur batteries manufactured using electrolytes of Comparative Example 1, Example 1, Example 2 and Example 3 in the present disclosure.
FIG. 7 shows the results of energy density evaluation over repeated charge and discharge cycles in lithium-sulfur batteries manufactured using electrolytes of Comparative Example 2, Example 4 and Example 5 in the present disclosure.
FIG. 8 shows the results of specific capacity evaluation over repeated charge and discharge cycles in lithium-sulfur batteries manufactured using electrolytes of Comparative Example 2, Example 4 and Example 5 in the present disclosure.
FIG. 9 shows the results of Coulombic efficiency evaluation over repeated charge and discharge cycles in lithium-sulfur batteries manufactured using electrolytes of Comparative Example 2, Example 4 and Example 5 in the present disclosure.
FIG. 10 shows the results of specific capacity evaluation over repeated charge and discharge cycles in lithium-sulfur batteries manufactured using electrolytes of Example 1, Example 6 and Example 7 in the present disclosure.
FIG. 11 shows the results of Coulombic efficiency evaluation over repeated charge and discharge cycles in lithium-sulfur batteries manufactured using electrolytes of Example 1, Example 6 and Example 7 in the present disclosure.

### BEST MODE

Hereinafter, the present disclosure will be described in more detail.

The term "composite" as used herein refers to a material in which two or more materials are combined to form physically or chemically different phases and which exhibits more effective functions.

The term "(poly)sulfide" as used herein is the concept that covers "(poly)sulfide ion (Sₓ²⁻, 1≤x≤8)" and "lithium (poly)sulfide (Li₂Sₓ or Li₂Sₓ⁻ 1≤x≤8)".

The term "polysulfide" used herein is the concept that covers "polysulfide ion (Sₓ²⁻, 1<x≤8)" and "lithium polysulfide (Li₂Sₓ or Li₂Sₓ⁻ 1<x≤8)".

A lithium secondary battery has a characteristic that lithium ions are reduced on the negative electrode surface during charging and discharging, and lithium metal deposits on the negative electrode over repeated charge and discharge cycles.

According to an aspect of the present disclosure, there is provided an electrolyte for a lithium secondary battery for suppressing and preventing dendrite formation of lithium ions on the surface of the negative electrode including a lithium metal layer, thereby improving the life and Coulombic efficiency of a lithium-sulfur battery using the same. In particular, according to an aspect of the present disclosure, there is provided an electrolyte for use in a lithium-sulfur battery.

In addition, according to an aspect of the present disclosure, there is provided an electrolyte for suppressing the elution of polysulfide from the positive electrode into the electrolyte, thereby reducing the loss of the electrolyte and active material at the negative electrode, and suppressing degradation of the negative electrode, resulting in longer life of the lithium-sulfur battery.

The electrolyte according to an aspect of the present disclosure includes a non-aqueous solvent, a first lithium salt, a second lithium salt, an inorganic nitrate and an organic nitrate.

The role of the non-aqueous solvent may include, for example, dissolving the additive such as the lithium salt and the nitrate and acting as an ion transfer medium in the battery, but is not limited thereto.

As described above, the electrolyte according to an aspect of the present disclosure includes the two or more types of salt compounds. Specifically, the electrolyte includes the lithium salt and the nitrate, the lithium salt includes the first lithium salt and the second lithium salt, and the nitrate includes the inorganic nitrate and the organic nitrate.

In the present disclosure, the lithium salt refers collectively to all salt compounds containing lithium ions (Li⁺) as the cation, and the nitrate refers collectively to all salt compounds containing nitrate (-NO₃⁻) as the anion. In this instance, as described below, the inorganic nitrate may include, for example, lithium nitrate (LiNO₃), and because lithium nitrate contains a lithium ion as the cation and a nitrate ion as the anion, it may correspond to both a lithium salt and a nitrate. In an example, when the inorganic nitrate includes lithium nitrate, the electrolyte includes the first and second lithium salts other than lithium nitrate and the organic nitrate. In another example, when the lithium salt includes lithium nitrate, the electrolyte includes a different type of lithium salt other than lithium nitrate, the inorganic nitrate other than lithium nitrate and the organic nitrate.

In the present disclosure, the role of each of the first lithium salt and the second lithium salt may include acting as a medium to transport lithium ions and electrons between the positive electrode and the negative electrode, but is not limited thereto.

In the present disclosure, the role of each of the inorganic nitrate and the organic nitrate may include suppressing the elution of polysulfide from the positive electrode into the electrolyte, or preventing decomposition and loss of the lithium salt, or advantageously contributing to the formation of a protective layer on the negative electrode surface to prevent degradation of the negative electrode and improve the life of the battery, but is not limited thereto.

In the present disclosure, -NO₃⁻ ion in the nitrate may play a role in forming LiNₓO_{y} material in the protective layer (referred to as solid electrolyte interphase (SEI)) on the negative electrode to stabilize the negative electrode, thereby improving the life of the lithium-sulfur battery, but its role is not limited thereto. In particular, the inventors have found that when the nitrate includes both the inorganic nitrate and the organic nitrate to provide -NO₃⁻ ions in the electrolyte of the lithium-sulfur battery, there is a beneficial effect in improving the life of the lithium-sulfur battery through stabilization of the negative electrode and suppression of polysulfide at the positive electrode.

In an embodiment of the present disclosure, the inorganic nitrate may include, for example, a monovalent nitrate, and may typically include lithium nitrate (LiNO₃), but the present disclosure is not limited thereto.

In an embodiment of the present disclosure, the organic nitrate may include, for example, a monovalent nitrate, a divalent nitrate, a trivalent nitrate, or a mixture thereof.

For example, the organic nitrate may include a divalent nitrate, and may typically include isosorbide dinitrate (ISDN), 2,2,3,3-tetrafluorobutane-1,4-diol dinitrate, triethylene glycol dinitrate or a mixture thereof, but the present disclosure is not limited thereto.

In an embodiment of the present disclosure, the organic nitrate may include isosorbide dinitrate (ISDN).

Isosorbide dinitrate (ISDN) is a material having a structure of the following Chemical Formula 1. As shown in the following Chemical Formula 1, ISDN is a material with two -NO₃⁻ ions bonded to an organic framework structure, and providing two conjugated -NO₃⁻ ions per molecule.

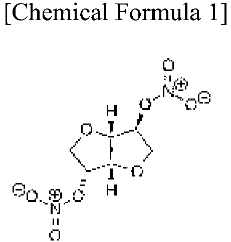

In an embodiment of the present disclosure, when the electrolyte includes the organic nitrate together with a conjugated heterocyclic compound as the non-aqueous solvent, this may have a beneficial effect on stabilization of the negative electrode and suppression of polysulfide elution.

In an embodiment of the present disclosure, the inorganic nitrate may be included in an amount of 0.1 to 8 parts by weight, specifically 0.5 to 6 parts by weight, 1 to 5 parts by weight, or 3 to 5 parts by weight, based on the total 100 parts by weight of the non-aqueous solvent, the first lithium salt and the second lithium salt, in terms of solubility in the electrolyte. When the inorganic nitrate is included in the aforementioned range of amounts, the inorganic nitrate may have an advantageous effect on the lifespan of the battery, but the present disclosure is not limited thereto.

According to an embodiment of the present disclosure, the organic nitrate may be preferably included in an amount that is equal to or smaller than the weight of the inorganic nitrate. The organic nitrate may be included in a larger amount than the inorganic nitrate, but in terms of the efficiency of providing nitrate ions vs weight, the organic nitrate may be preferably included in an amount that is equal to or smaller than the weight of the inorganic nitrate.

In this aspect, the organic nitrate may be, for example, included in an amount of 0.1 to 5 parts by weight, 0.5 to 5 parts by weight, 0.5 to 4 parts by weight, 0.5 to 3.5 parts by weight, 0.5 to 3 parts by weight, 0.5 to 2.5 parts by weight, 0.5 to 2 parts by weight, 0.5 to 1.5 parts by weight, or 0.5 to 1 part by weight, based on the total 100 parts by weight of the non-aqueous solvent, the first lithium salt and the second lithium salt, but the present disclosure is not limited thereto.

In an embodiment of the present disclosure, the inorganic nitrate and the organic nitrate may be, for example, included at a weight ratio ranging from 10:1 to 1:1, from 5:1 to 1:1, from 5:1 to 3:1, from 7:1 to 3:1, from 7:1 to 4:1, from 6:1 to 4:1, or from 6:1 to 5:1, but the present disclosure is not limited thereto. For example, when the inorganic nitrate and the organic nitrate are included at the aforementioned weight ratio, it may be more preferable in terms of a synergistic effect of battery performance by the combination of the inorganic nitrate and the organic nitrate, but the present disclosure is not limited thereto.

In an embodiment of the present disclosure, the electrolyte may include 3 to 6 parts by weight of the inorganic nitrate and 0.5 to 3 parts by weight of the organic nitrate based on the total 100 parts by weight of the non-aqueous solvent, the first lithium salt and the second lithium salt.

According to an aspect of the present disclosure, the non-aqueous solvent includes an acyclic ether and a conjugated heterocyclic compound.

In an embodiment of the present disclosure, the acyclic ether may be preferably included in an amount of 70 vol% or more based on the total volume of the non-aqueous solvent in terms of improving the solubility of lithium polysulfide released from the positive electrode and the solubility of the lithium salt and the nitrate.

For example, the acyclic ether may be included in an amount of 70 vol% to 95 vol%, 75 vol% to 90 vol%, 75 vol% to 85 vol%, or 80 vol% based on the total volume of the non-aqueous solvent.

In an embodiment of the present disclosure, the acyclic ether may include, for example, dimethyl ether, diethyl ether, dipropyl ether, dibutyl ether, diisobutyl ether, ethyl methyl ether, ethylpropyl ether, ethyl tertbutyl ether, dimethoxymethane, trimethoxymethane, dimethoxyethane, diethoxyethane, dimethoxypropane, diethylene glycol dimethyl ether, diethylene glycol diethyl ether, triethylene glycol dimethyl ether, tetraethylene glycol dimethyl ether, ethylene glycol divinyl ether, diethylene glycol divinyl ether, triethylene glycol divinyl ether, dipropylene glycol dimethyl ether, butylene glycol ether, diethylene glycol ethyl methyl ether, diethylene glycol isopropyl methyl ether, diethylene glycol butyl methyl ether, diethylene glycol tertbutyl ethyl ether, ethylene glycol ethyl methyl ether, or a mixture thereof. Preferably, the acyclic ether may include at least one selected from the group consisting of dimethoxyethane, diethoxyethane, diethylene glycol dimethyl ether, triethylene glycol dimethyl ether and tetraethylene glycol dimethyl ether. More preferably, the acyclic ether may include dimethoxyethane.

In an embodiment of the present disclosure, the acyclic ether may include dimethoxyethane (DME) alone.

In an embodiment of the present disclosure, the conjugated heterocyclic compound refers collectively to compounds having a structure in which p orbitals of three or more neighboring atoms that form the compound may overlap other p orbitals of adjacent atoms connected by sigma bonds, and including atoms other than carbon as ring atoms in the structure.

In an embodiment of the present disclosure, when the non-aqueous solvent includes the conjugated heterocyclic compound, the heterocyclic compound may form a stable solid electrolyte interphase (SEI, also referred to as 'electrode-electrolyte interface') on the surface of the lithium-based metal (negative electrode) by a ring opening reaction at the initial discharge stage of the battery, thereby suppressing the formation of lithium dendrites. Further, it may be possible to reduce electrolyte decomposition on the lithium-based metal surface and the consequential side reactions, thereby improving the life characteristics of the lithium-sulfur battery. In addition, by the conjugate structure, it may be difficult to dissolve the salt due to the delocalization of lone pair electrons of heteroatoms, typically sulfur atoms, thereby reducing the amount of polysulfide that dissolves and is eluted in the electrolyte solution.

In the present disclosure, the conjugation action between the nitrate and the conjugated heterocyclic compound in the non-aqueous solvent may provide a more advantageous effect on stabilizing the negative electrode and suppressing the dissolution of polysulfide in the electrolyte. In particular, the organic nitrate includes the carbon framework structure in the structure, and it may be more advantageous in terms of forming the conjugate structure with the conjugated heterocyclic compound, thereby providing a synergistic effect between the organic nitrate and the conjugated heterocyclic compound in terms of stabilizing the negative electrode and suppressing the elution of polysulfide.

In an embodiment of the present disclosure, the conjugated heterocyclic compound may include a 4 to 15-membered, preferably 4 to 7-membered, more preferably 5 to 6-membered heterocyclic compound. In addition, the conjugated heterocyclic compound may include a heterocyclic compound which is unsubstituted or substituted with at least one substituent selected from the group consisting of an alkyl group having 1 to 4 carbon atoms, a cyclic alkyl group having 3 to 8 carbon atoms, an aryl group having 6 to 10 carbon atoms, a halogen group, a nitro group (-NO₂), an amine group (-NH₂) and a sulfonyl group (-SO₂). In addition, the conjugated heterocyclic compound may include a polycyclic compound of at least one of a cyclic alkyl group having 3 to 8 carbon atoms and an aryl group having 6 to 10 carbon atoms and the heterocyclic compound.

When the conjugated heterocyclic compound is substituted with an alkyl group having 1 to 4 carbon atoms, preferably it may be possible to stabilize radicals, thereby suppressing side reactions in the electrolyte solution. In addition, when the conjugated heterocyclic compound is substituted with a halogen group or a nitro group, preferably it may be possible to form a functional protective layer on the lithium-based metal surface, and in this instance, the functional protective layer is stable as a compacted protective layer, having an advantage of allowing uniform deposition of the lithium-based metal, and suppressing side reactions between the polysulfide and the lithium-based metal.

In an embodiment of the present disclosure, the conjugated heterocyclic compound may include at least one of a conjugated cyclic ether compound and a thiophene-based compound.

In an embodiment of the present disclosure, the conjugated cyclic ether compound may include, for example, a furan-based compound and a pyran-based compound, and more specifically, furan, 2-methylfuran, 3-methylfuran, 2-ethylfuran, 2-propylfuran, 2-butylfuran, 2,3-dimethylfuran, 2,4-dimethylfuran, 2,5-dimethylfuran, 2H-pyran, 4H-pyran, 2-methylpyran, 3-methylpyran, 4-methylpyran, benzofuran, 2-(2-nitrovinyl)furan, or a mixture of two or more selected from them, but is not limited thereto.

In an embodiment of the present disclosure, the thiophene-based compound may include, for example, thiophene, 2-methylthiophene, 2-ethylthiophene, 2-propylthiophene, 2-butylthiophene, 2,3-dimethylthiophene, 2,4-dimethylthiophene, 2,5-dimethylthiophene, benzothiophene, or a mixture thereof, but is not limited thereto.

In an embodiment of the present disclosure, in addition to the acyclic ether and the conjugated heterocyclic compound, the non-aqueous solvent may further include a non-conjugated cyclic ether. The non-conjugated cyclic ether may include, for example, at least one selected from the group consisting of 1,3-dioxolane, 4,5-dimethyl-dioxolane, 4,5-diethyl-dioxolane, 4-methyl-1,3-dioxolane, 4-ethyl-1,3-dioxolane, tetrahydrofuran, 2-methyltetrahydrofuran, 2,5-dimethyltetrahydrofuran, 2,5-dimethoxytetrahydrofuran, 2-ethoxytetrahydrofuran, 2-methyl-1,3-dioxolane, 2-vinyl-1,3-dioxolane, 2,2-dimethyl-1,3-dioxolane, 2-methoxy-1,3-dioxolane, 2-ethyl-2-methyl-1,3-dioxolane, tetrahydropyran, 1,4-dioxane, 1,2-dimethoxy benzene, 1,3-dimethoxy benzene, 1,4-dimethoxy benzene and isosorbide dimethyl ether. Preferably, the non-conjugated cyclic ether may include at least one selected from the group consisting of 1,3-dioxolane, tetrahydrofuran, 2-methyltetrahydrofuran and 2,5-dimethyltetrahydrofuran, but is not limited thereto.

In an embodiment of the present disclosure, the non-aqueous solvent may include 1,2-dimethoxyethane (DME) and 2-methylfuran (2-MeF).

Additionally, the non-aqueous solvent may include the acyclic ether and the conjugated heterocyclic compound at a volume ratio of from 95:5 to 5:95, preferably from 95:5 to 50:50, and most preferably from 90:10 to 70:30, or 80:20. The volume ratio corresponds to a ratio of "vol% of the acyclic ether":"vol% of the conjugated heterocyclic compound" in the non-aqueous solvent.

In an embodiment of the present disclosure, in addition to the acyclic ether, the conjugated heterocyclic compound and the non-conjugated cyclic ether compound, the non-aqueous solvent may further include another organic solvent that is able to dissolve the lithium salt and the additive. For example, the organic solvent commonly used in the electrolyte solution of the lithium secondary battery may include ester, amide, acyclic carbonate and cyclic carbonate, and in an embodiment of the present disclosure, in addition to the ether-based solvent, the non-aqueous solvent may further include a non-aqueous solvent commonly used in the electrolyte solution of the lithium secondary battery. However, preferably, in terms of the solubility of the lithium salt, the nitrate and the aryl derivative, the electrolyte solution for the lithium secondary battery may not include the carbonate-based solvent as the non-aqueous solvent.

In an embodiment of the present disclosure, the ester may include, for example, any one selected from the group consisting of methyl acetate, ethyl acetate, propyl acetate, methyl propionate, ethyl propionate, propyl propionate, γ-butyrolactone, γ-valerolactone, γ-caprolactone, σ-valerolactone and ε-caprolactone or a mixture thereof, but is not limited thereto.

In an embodiment of the present disclosure, the acyclic carbonate may typically include, for example, any one selected from the group consisting of dimethyl carbonate, diethyl carbonate, dipropyl carbonate, ethylmethyl carbonate, methylpropyl carbonate and ethylpropyl carbonate or a mixture thereof, but is not limited thereto.

In an embodiment of the present disclosure, the cyclic carbonate includes, for example, any one selected from the group consisting of ethylene carbonate, propylene carbonate, 1,2-butylene carbonate, 2,3-butylene carbonate, 1,2-pentylene carbonate, 2,3-pentylene carbonate, vinylene carbonate, vinylethylene carbonate and their halogenides or a mixture thereof. Examples of the halogenides include fluoroethylene carbonate, but are not limited thereto.

In another embodiment of the present disclosure, because the carbonate-based solvent does not dissolve the nitrate or has low solubility, the non-aqueous solvent may not include the carbonate-based solvent.

In an embodiment of the present disclosure, the non-aqueous solvent may include the carbonate-based solvent in a very small amount so as not to affect the solubility of the nitrate, and for example, when the non-aqueous solvent includes the carbonate-based solvent, the carbonate-based solvent may be included in an amount of 3 wt% or less, 2 wt% or less, 1 wt% or less, 0.5 wt% or less, or 0 wt% (i.e., none) based on the total weight of the electrolyte for the lithium-sulfur battery.

In particular, according to an embodiment of the present disclosure, each of the first lithium salt and the second lithium salt includes a fluorine-containing compound. The first lithium salt and the second lithium salt include a compound containing one or more fluorine (F) atoms as the anion, and specifically, may include a fluorine-containing inorganic lithium salt, a fluorine-containing organic lithium salt, or a mixture thereof.

In an embodiment of the present disclosure, the fluorine-containing inorganic lithium salt may include, for example, LiBF₄, LiPF₆, LiAsF₆, LiSbF₆, LiN(SO₂F)₂ or a mixture thereof, but the present disclosure is not limited thereto.

In an embodiment of the present disclosure, the fluorine-containing organic lithium salt may include, for example, LiCF₃SO₃, LiCF₃CO₂, LiSO₃CF₃, LiN(SO₂CF₃)₂, LiN(SO₂C₂F₅)₂, LiC(SO₂CF₃)₃, or a mixture thereof, but the present disclosure is not limited thereto.

In an embodiment of the present disclosure, the first lithium salt may include the fluorine-containing inorganic lithium salt, and the second lithium salt may include the fluorine-containing organic lithium salt.

In another embodiment of the present disclosure, the first lithium salt may be the fluorine-containing inorganic lithium salt, and the second lithium salt may be the fluorine-containing organic lithium salt.

In an embodiment of the present disclosure, the first lithium salt may include LiN(SO₂F)₂ alone.

In another embodiment of the present disclosure, the second lithium salt may include LiN(SO₂C₂F₅)₂ alone.

In an embodiment of the present disclosure, in addition to the first lithium salt and the second lithium salt, the lithium salt may further include a third lithium salt without departing from the scope of the present disclosure. The third lithium salt is a lithium salt other than the fluorine-containing lithium salt, and may include any lithium salt that may be used in the electrolyte of the lithium-sulfur battery without limitation. For example, the third lithium salt may further include LiCl, LiBr, LiI, LiClO₄, LiB₁₀Cl₁₀, LiC₄BO₈, LiAlCl₄, LiSO₃CH₃, lithium chloroborane, lithium lower aliphatic carboxylic acid, lithium tetraphenylborate, lithium imide or two or more of them, but the present disclosure is not limited thereto.

In an embodiment of the present disclosure, the total molar concentration of the first lithium salt and the second lithium salt in the mixture of the non-aqueous solvent and the first lithium salt and the second lithium salt may be limited to, for example, 1.0 M or less, specifically 0.75 M or less, and more specifically 0.50 M or less. When the concentration of the lithium salt falls within the aforementioned range, this may have a beneficial effect on solubility of the lithium salt in the electrolyte and battery performance improvement effect by the additive, but the present disclosure is not limited thereto.

In an embodiment of the present disclosure, specifically, the total molar concentration of the first lithium salt and the second lithium salt in the mixture of the non-aqueous solvent, the first lithium salt and the second lithium salt may range from 0.3 M to 1.0 M, from 0.33 M to 0.8 M, from 0.33 M to 0.75 M, from 0.40 M to 0.70 M, from 0.40 M to 0.60 M, for example, 0.50 M.

In an embodiment of the present disclosure, the first lithium salt and the second lithium salt may be included at the equal molar ratio, but when considering the mobility of the lithium salt in the electrolyte, the first lithium salt may be preferably included at higher molar concentration than the second lithium salt. For example, the molar concentration ratio of the first lithium salt and the second lithium salt may range from 5:1 to 1:1, from 3:1 to 1:1 or from 2:1 to 1:1, but the present disclosure is not limited thereto.

As described above, according to an aspect of the present disclosure, there is provided the electrolyte of the novel composition having the superior effect of suppressing and preventing degradation of the negative electrode when used in the lithium-sulfur battery.

According to another aspect of the present disclosure, there is provided a lithium-sulfur battery including the electrolyte for the lithium-sulfur battery of the above-described composition.

The lithium-sulfur battery includes the electrolyte, a positive electrode, a negative electrode, a separator between the positive electrode and the negative electrode, and a battery case.

According to an aspect of the present disclosure, the lithium-sulfur battery may refer to a battery including a sulfur-based compound containing a sulfur (S)-sulfur (S) bond as a positive electrode active material and a lithium metal layer as the negative electrode.

In an embodiment of the present disclosure, the lithium metal layer may be a thin layer including lithium metal (Li) alone.

In another embodiment of the present disclosure, the lithium metal layer may be a thin layer including a lithium alloy of lithium and a material that forms an alloy with lithium, for example, silicon, tin, sodium, potassium, rubidium, cesium, francium, beryllium, magnesium, calcium, strontium, barium, radium, aluminum, or two or more of them.

In an embodiment of the present disclosure, the negative electrode may be in the form of a free-standing film including the lithium metal layer and a protective layer without a support.

In another embodiment of the present disclosure, the negative electrode may include the lithium metal layer and the protective layer (also referred to as solid electrolyte interphase (SEI)) on the support.

In an embodiment of the present disclosure, the negative electrode may include the lithium metal layer and the solid electrolyte interphase (SEI) on the surface of the lithium metal layer.

In this instance, the solid electrolyte interphase (SEI) may contain nitrogen (N) as a constituent. More specifically, the solid electrolyte interphase may contain nitrogen (N) derived from the inorganic nitrate and the organic nitrate.

In an embodiment of the present disclosure, when the electrolyte for the lithium-sulfur battery includes ISDN as the organic nitrate, the amount of nitrogen (N) in the solid electrolyte interphase (SEI) within the negative electrode may be the largest. Through this, there may be the most remarkable effect on slowing down the degradation of the battery over the repeated charge and discharge of the lithium-sulfur battery, but the present disclosure is not limited thereto.

In this instance, the support may include a current collector commonly used in the electrode for the lithium secondary battery or a polyolefin porous support used as the separator, but is not limited thereto.

In an embodiment of the present disclosure, the current collector supports the lithium metal layer and is not limited to a particular one and may include those having high conductivity without causing any chemical change in the lithium secondary battery using the same. For example, the current collector may include copper, stainless steel, aluminum, nickel, titanium, palladium, sintered carbon, copper or stainless steel treated with carbon, nickel or silver on the surface, or an aluminum-cadmium alloy.

In an embodiment of the present disclosure, the current collector may include, for example, a copper foil having a thickness of 10 µm to 30 µm, for example, 10 µm.

In addition, the negative electrode according to an embodiment of the present disclosure may further include any component commonly used in the negative electrode of the lithium secondary battery, in particular, the lithium-sulfur battery, without departing from the scope of the present disclosure.

In an embodiment of the present disclosure, the positive electrode is not limited to a particular type and may include those that include a sulfur-based compound containing a sulfur (S)-sulfur (S) bond as the active material.

In an embodiment of the present disclosure, the positive electrode may include a positive electrode current collector and a positive electrode active material layer on one or two surfaces of the positive electrode current collector.

The positive electrode current collector supports the positive electrode active material, and is not limited to a particular one and may include those having high conductivity without causing any chemical change in the corresponding battery. For example, the positive electrode current collector may include copper, stainless steel, aluminum, nickel, titanium, palladium, sintered carbon, copper or stainless steel treated with carbon, nickel or silver on the surface, or an aluminum-cadmium alloy.

The positive electrode current collector may have the microtextured surface to increase the bond strength with the positive electrode active material, and may come in different forms, for example, film, sheet, foil, mesh, net, porous body, foam or non-woven fabric.

The positive electrode active material layer includes the positive electrode active material and may further include a conductive material, a binder and an additive.

In an embodiment of the present disclosure, the positive electrode active material may include a sulfur-carbon composite.

In an embodiment of the present disclosure, the sulfur-carbon composite may include a porous carbon material; and a sulfur-based compound loaded into at least one of an outer surface of the porous carbon material and the inside of pores of the porous carbon material. Because sulfur acting as the positive electrode active material has no electrical conductivity, it is used in combination with a conductive material such as the carbon material, and the porous carbon material may be used to load the sulfur. In addition, the sulfur-based compound may include, for example, inorganic sulfur (S₈), lithium sulfide (Li₂S), lithium polysulfide (Li₂Sₓ, 1 < x ≤ 8), a disulfide compound, a carbon-sulfur polymer ((C₂S_{y})ₙ, y = 2.5 to 50, n ≥ 2), lithium sulfide (Li₂S) or two or more of them. Preferably, the sulfur-based compound may include inorganic sulfur (S₈).

In an embodiment of the present disclosure, the porous carbon material is used to load the sulfur-based compound as the positive electrode active material, provide the framework for holding the sulfur-based compound uniformly and stably and improve the conductivity of the positive electrode, and is not limited to a particular type and may include any carbon material having porous properties.

The porous carbon material may be spherical, rod-like, needle-like, platy, tubular or bulky in shape, and is not limited to a particular shape and may have any shape commonly used in the lithium-sulfur battery. The porous carbon material may include any commonly used ones having a porous structure or high specific surface area.

For example, the porous carbon material may include at least one selected from the group consisting of graphite; graphene; carbon black such as Denka black, acetylene black, Ketjen black, channel black, furnace black, lamp black or thermal black; carbon nanotubes (CNTs) such as single-walled carbon nanotubes (SWCNT) or multi-walled carbon nanotubes (MWCNT); carbon fibers such as graphite nanofibers (GNF), carbon nanofibers (CNF) or activated carbon fibers (ACF); and graphite such as natural graphite, artificial graphite or expandable graphite; and activated carbon, but is not limited thereto. Preferably, the porous carbon material may be carbon nanotubes.

In an embodiment of the present disclosure, the porous carbon material may include, for example, carbon nanotubes (CNT).

In an embodiment of the present disclosure, the sulfur-carbon composite may include the sulfur-based compound in an amount of 65 wt% or more, for example, from 65 wt% to 90 wt%, from 65 wt% to 85 wt%, from 70 wt% to 80 wt%, or from 70 wt% to 75 wt%, based on the total weight of the sulfur-based compound and the porous carbon material.

When the amount of the sulfur-based compound in the sulfur-carbon composite falls within the aforementioned range, it may be preferred in terms of electron transport area of the sulfur-carbon composite and electrolyte wettability of the positive electrode, and for example, it may be preferred in increasing the usable surface area in the sulfur-carbon composite, thereby suppressing the elution of sulfur from the positive electrode, but the present disclosure is not limited thereto.

The method for producing the sulfur-carbon composite is not limited to a particular one in the present disclosure, and may include any method commonly used in the art. For example, one of the methods may include simply mixing the sulfur and the porous carbon material and performing thermal treatment to form a composite.

In addition to the above-described composition, the positive electrode active material may include at least one selected from transition metal elements, Group III elements, Group IVA elements, sulfur compounds of these elements and alloys of these elements and sulfur.

The transition metal elements may include Sc, Ti, V, Cr, Mn, Fe, Co, Ni, Cu, Zn, Y, Zr, Nb, Mo, Tc, Ru, Rh, Pd, Os, Ir, Pt, Au or Hg, the Group III elements may include Al, Ga, In or Ti, and the Group IVA elements may include Ge, Sn or Pb.

In an embodiment of the present disclosure, the conductive material, the binder and other component used in the positive electrode active material layer may include those commonly used in the art and are not limited to particular ones in the present disclosure.

In an embodiment of the present disclosure, the binder may include, for example, a mixture of three types of binder resins. Specifically, in an embodiment of the present disclosure, the binder may include a first binder resin, a second binder resin and a third binder resin, wherein the first binder resin may include lithium-substituted polyacrylic acid, the second binder resin may include lithium-substituted carboxymethyl cellulose, and the third binder resin may include colloidal particle-type aqueous binder resin.

According to an embodiment of the present disclosure, when the binder in the positive electrode active material layer includes the specific combination of the first binder resin and the second binder resin that contribute to the improved process efficiency with the third binder resin that contributes to the improved adhesion strength, there is an effect of maintaining productivity and output performance at high level and achieving high adhesion strength, but the present disclosure is not limited thereto.

In an embodiment of the present disclosure, the first binder resin is lithium-substituted polyacrylic acid. The lithium-substituted polyacrylic acid is a substituted form of polyacrylic acid in which the hydrogen on the carboxyl group (COOH) in polyacrylic acid is replaced by lithium. The lithium-substituted polyacrylic acid may be formed through neutralization reaction with an addition of a base containing lithium to polyacrylic acid. Preferably, the lithium-substituted polyacrylic acid may be formed by adding the base so that a molar ratio of the lithium to the carboxyl group of the polyacrylic acid is 1:1 to completely neutralize the polyacrylic acid. For example, the lithium-substituted polyacrylic acid of the present disclosure may be formed by neutralization using LiOH so that the pH ranges from 6 to 9, or from 6.5 to 8.

In an embodiment of the present disclosure, the second binder resin is lithium-substituted carboxymethyl cellulose. The lithium-substituted carboxymethyl cellulose may provide high adhesion strength to the electrode active material as well as the surface of the electrode current collector. In addition, the lithium-substituted carboxymethyl cellulose may act as a dispersant in the binder composition, and in particular, when mixed with the positive electrode active material, may improve the dispersion of the positive electrode active material. Furthermore, the lithium-substituted carboxymethyl cellulose may improve the stability of the slurry with high thickening power.

The lithium-substituted carboxymethyl cellulose may be formed through neutralization reaction with an addition of a base containing lithium to carboxymethyl cellulose, followed by washing, or may be formed by directly binding lithium ions to carboxymethyl cellulose. For example, when the lithium-substituted carboxymethyl cellulose is formed through neutralization reaction, the lithium-substituted carboxymethyl cellulose is preferably formed by adding the base so that a molar ratio of lithium to carboxymethyl cellulose is 1:1 to completely neutralize the carboxymethyl cellulose. For example, the lithium-substituted carboxymethyl cellulose of the present disclosure may be formed by neutralization using LiOH so that the pH ranges from 6 to 9, or from 6.5 to 8.

In an embodiment of the present disclosure, the third binder resin is colloidal particle-type aqueous binder resin. The colloidal particle-type aqueous binder resin may exist in a state in which particles are not fully dissolved in the aqueous binder composition, thereby suppressing an increase in viscosity of the dissolved polymer and the binder composition, and may act as a binder to increase the adhesion strength between electrode active materials and/or between the electrode active material and the electrode current collector.

The colloidal particle-type aqueous binder resin exists in a state in which particles are stably dispersed in the aqueous solvent. The particles are not fully dissolved and have a shape that is close to a sphere and an average particle size (D50) ranging from 50 nm to 500 nm. The average particle size (D50) may refer to a particle size at the 50% point of the cumulative particle size distribution of the particles.

The colloidal particle-type aqueous binder resin may include styrene butadiene rubber, acrylic polymer including a repeating unit derived from at least one type of acrylic monomer, or a mixture thereof.

The acrylic polymer is not limited to a particular one and may include those including repeating units derived from at least one type of acrylic monomer, for example, acrylic polymers derived from a single type of acrylic monomer or copolymers including repeating units derived from at least two types of acrylic monomers. The acrylic monomer may include acrylic acid, alkyl acrylate, alkyl methacrylate or isoalkyl (meth)acrylate, and in this case, "alkyl" may include an alkyl group having 1 to 10 carbon atoms, and more specifically, an alkyl group having 1 to 5 carbon atoms. Specific examples include methyl (meth)acrylate, ethyl (meth)acrylate, propyl (meth)acrylate, butyl (meth)acrylate or pentyl (meth)acrylate. Preferably, the acrylic polymer may include acrylic copolymers including repeating units derived from acrylic acid and butyl (meth)acrylate as the acrylic monomer.

In an embodiment of the present disclosure, the separator separates or insulates the positive electrode from the negative electrode and allows lithium ion transport between the positive electrode and the negative electrode. The separator may be made of a porous non-conductive or insulating material, and is not limited to a particular type and may include any separator commonly used in the lithium secondary battery. The separator may include a free-standing film or a coating layer added to the positive electrode and/or the negative electrode.

In an embodiment of the present disclosure, the electrolyte act as a medium for the movement of ions involved in electrochemical reaction of the lithium secondary battery, for example, the lithium-sulfur battery, and may include the non-aqueous solvent and the lithium salt.

The electrolyte is not limited to a particular type and may include any electrolyte having composition that may be used in the lithium secondary battery, specifically, the lithium-sulfur battery.

In an embodiment of the present disclosure, the lithium-sulfur battery may have a variety of shapes, for example, a coin shape, a pouch shape or a cylindrical shape, but is not limited thereto.

Hereinafter, examples are presented to help the understanding of the present disclosure, but the following examples are provided to describe the present disclosure for illustrative purposes, and it will be apparent to those skilled in the art that a variety of changes and modifications may be made within the technical aspects and scope of the present disclosure, and obviously, such changes and modifications fall within the scope of the appended claims.

### Experimental Example 1. Performance determination of organic nitrate

### [Preparation of electrolyte]

### Comparative Preparation Example 1

0.33 M lithium bis(fluorosulfonyl)imide (LiFSI, LiN(SO₂F)₂) and 0.17 M lithium bis(pentafluoroethanesulfonyl)imide (LiBETI, LiN(SO₂C₂F₅)₂) were added to 1,2-dimethoxyethane (DME) and stirred for 12 hours to dissolve the lithium salt, and 2-methylfuran (2-MeF) as a conjugated heterocyclic compound was added and stirred to prepare an electrolyte (DME:2-MeF=8:2 v/v).

### Preparation Example 1

0.33 M lithium bis(fluorosulfonyl)imide (LiFSI, LiN(SO₂F)₂), 0.17 M lithium bis(pentafluoroethanesulfonyl)imide (LiBETI, LiN(SO₂C₂F₅)₂) and 5 wt% of isosorbide dinitrate (ISDN) were added to 1,2-dimethoxyethane (DME) and stirred for 12 hours, and 2-methylfuran (2-MeF) as a conjugated heterocyclic compound was added and stirred to prepare an electrolyte (DME:2-MeF=8:2 v/v).

### [Manufacture of lithium-sulfur battery]

A pouch-type lithium-sulfur battery was manufactured using the electrolyte of each of Comparative Preparation Example 1 and Preparation Example 1 by the following method:
As a negative electrode, a 60 µm-thick lithium foil (Ganfeng lithium group) was prepared.

As a positive electrode, inorganic sulfur (S₈) and carbon nanotubes (CNT) were mixed to prepare a sulfur-carbon composite (S₈ 75 wt%) as a positive electrode active material, and 95 wt% of the as-prepared sulfur-carbon composite and 5 wt% of polyacrylic acid (PAA) as a binder were mixed to prepare a positive electrode slurry composition. The positive electrode slurry composition was applied to two surfaces of an aluminum current collector, dried at 80°C and rolled using a roll press to prepare an electrode having a loading amount of 3.0 mAh/cm².

As a separator, a polyethylene separator having a thickness of 12 µm and a porosity of 46 vol% was prepared and positioned between the positive electrode and the negative electrode prepared above.

The positive electrode/separator/negative electrode assembly was placed in a pouch-type case, the as-prepared electrolyte was injected and the case was covered with the lid and sealed to manufacture a pouch-type lithium-sulfur battery.

### [Performance evaluation of lithium-sulfur battery]

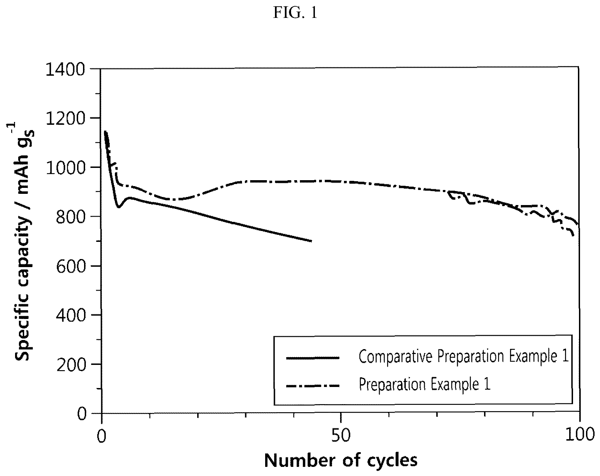

The as-prepared lithium-sulfur battery was activated by discharging at 0.1C three times at 25°C, and then was subjected to charging at 0.2C and discharging at 0.3C (CC mode, 1.8V to 2.5V) over repeated charge and discharge cycles. FIGS. 1 to 4 show the results of battery performance evaluation in the charge and discharge process.

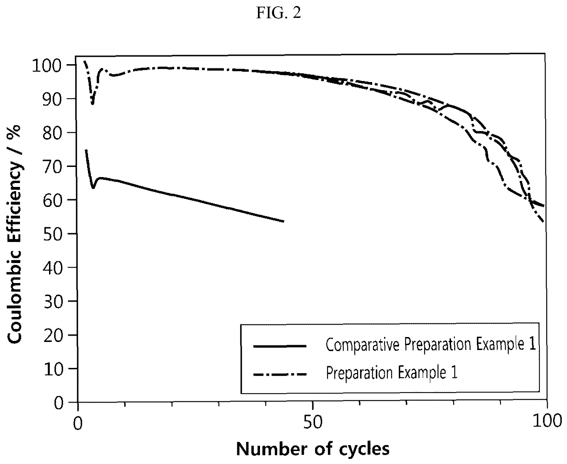

FIG. 1 shows the results of specific capacity evaluation over repeated charge and discharge cycles, and FIG. 2 shows the results of Columbic efficiency evaluation over repeated charge and discharge cycles. Referring to the results of FIGS. 1 and 2, it was confirmed that the life of the lithium-sulfur battery may be dramatically improved by adding ISDN to the electrolyte.

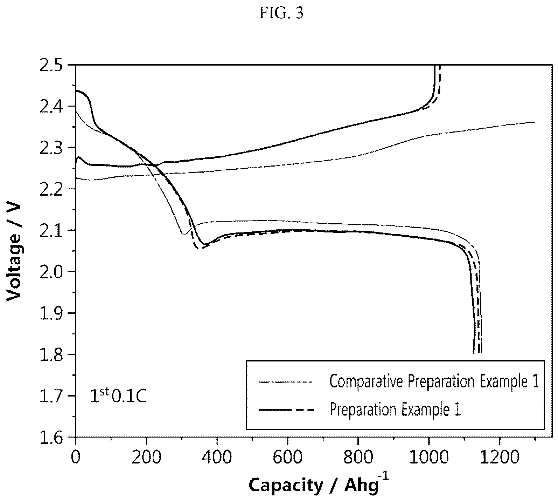

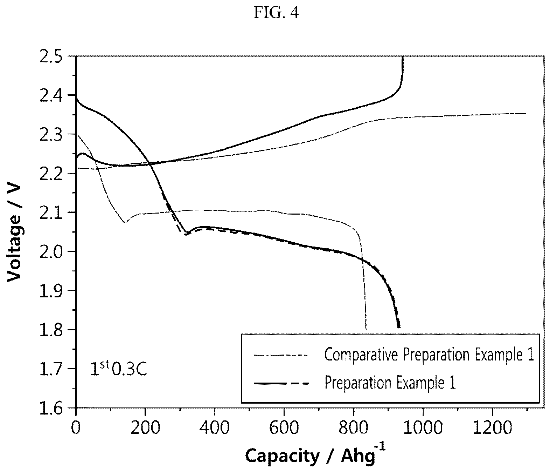

In addition, FIG. 3 shows the results of first discharge capacity evaluation during the formation process, and FIG. 4 shows the results of discharge capacity evaluation during the first 0.3C discharge after the formation process. Referring to the results of FIG. 3, when ISDN was added to the electrolyte, the reduction voltage of ISDN was observed during the formation process of the lithium-sulfur battery. Subsequently, referring to the results of FIG. 4, when ISDN was added to the electrolyte, it was confirmed that discharging was stably performed during discharging after the formation process, while when ISDN was not added, unstable cycling was observed in the first charge and discharge cycle.

Through this, it was confirmed that the addition of ISDN to the electrolyte of the lithium-sulfur battery may contribute to stable charge and discharge characteristics of the lithium-sulfur battery and improved life characteristics of the battery.

### Experimental Example 2. Performance evaluation of a combination of inorganic nitrate and organic nitrate 1

### [Preparation of electrolyte]

### Comparative Example 1

0.33 M lithium bis(fluorosulfonyl)imide (LiFSI, LiN(SO₂F)₂), 0.17 M lithium bis(pentafluoroethanesulfonyl)imide (LiBETI, LiN(SO₂C₂F₅)₂) and 5 wt% of lithium nitrate (LiNO₃) were added to 1,2-dimethoxyethane (DME) and stirred for 12 hours, and 2-methylfuran (2-MeF) as a conjugated heterocyclic compound was added and stirred to prepare an electrolyte (DME:2-MeF=8:2 v/v).

### Example 1

0.33 M lithium bis(fluorosulfonyl)imide (LiFSI, LiN(SO₂F)₂), 0.17 M lithium bis(pentafluoroethanesulfonyl)imide (LiBETI, LiN(SO₂C₂F₅)₂), 5 wt% of lithium nitrate (LiNO₃) and 1 wt% of isosorbide dinitrate (ISDN) were added to 1,2-dimethoxyethane (DME) and stirred for 12 hours, and 2-methylfuran (2-MeF) as a conjugated heterocyclic compound was added and stirred to prepare an electrolyte (DME:2-MeF=8:2 v/v).

### Example 2

An electrolyte was prepared in the same way as Example 1, except that 3 wt% of isosorbide dinitrate (ISDN) was added.

### Example 3

An electrolyte was prepared in the same way as Example 1, except that 5 wt% of isosorbide dinitrate (ISDN) was added.

TABLE 1 below summarizes the electrolyte composition of Comparative Example 1 and Examples 1 to 3.

**[TABLE 1]**

| | Non-aqueous solvent | First lithium salt | Second lithium salt | Inorganic nitrate | Organic nitrate |
|---|---|---|---|---|---|
| Comparative Example 1 | DME:2-MeF(8:2v/v) | LiFSI, 0.33M | LiBETI, 0.17 M | LiNO₃, 5 wt% | - |
| Example 1 | | | | | ISDN, 1 wt% |
| Example 2 | | | | | ISDN, 3 wt% |
| Example 3 | | | | | ISDN, 5 wt% |

### [Performance evaluation of lithium-sulfur battery]

A pouch-type lithium-sulfur battery was manufactured using the electrolyte of each of Comparative Example 1 and Examples 1 to 3 by the following method.

As a negative electrode, a 60 µm-thick lithium foil (Ganfeng lithium group) was prepared.

As a positive electrode, inorganic sulfur (S₈) and carbon nanotubes (CNT) were mixed to prepare a sulfur-carbon composite (S₈ 75 wt%) as a positive electrode active material, and 96 wt% of the as-prepared sulfur-carbon composite was mixed with a three-component mixed binder in which lithium-substituted carboxymethyl cellulose (GL Chem): lithium-substituted polyacrylic acid (Chemtros): acrylic colloid (acrylic acid ester-based copolymer, LG Chem, ADB84) were mixed at a weight ratio of 1.5:0.5:2.0 to prepare a positive electrode slurry composition. The positive electrode slurry composition was applied to two surfaces of an aluminum current collector, dried at 80°C, and rolled using a roll press to prepare an electrode having a loading amount of 2.95 mAh/cm².

As a separator, a polyethylene separator having a thickness of 12 µm and a porosity of 46 vol% was prepared and positioned between the positive electrode and the negative electrode prepared above.

The positive electrode/separator/negative electrode assembly was placed in a pouch-type case, the as-prepared electrolyte was injected and the case was covered with the lid and sealed to manufacture a pouch-type lithium-sulfur battery.

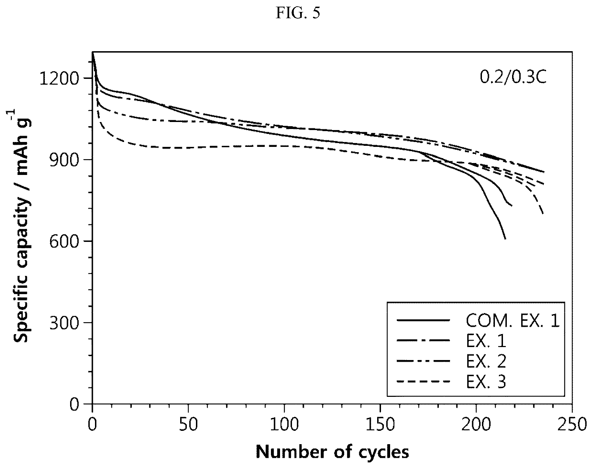

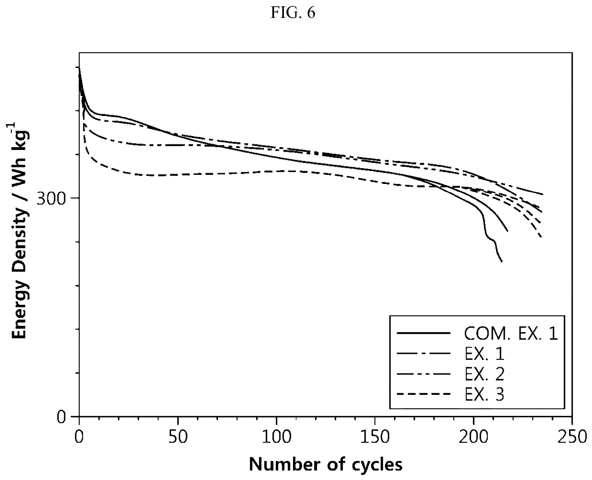

After manufacturing the lithium-sulfur battery as described above, charging and discharging were performed by the same method as Experimental Example 1, and the results are shown in FIGS. 5 and 6 below.

Referring to the results of FIGS. 5 and 6, it was confirmed that the life of the batteries using the electrolytes of Examples 1 to 3 using LiNO₃ and ISDN together was longer than Comparative Example 1 using LiNO₃ alone as the nitrate in the electrolyte. In particular, it was confirmed that the lithium-sulfur battery using the electrolyte of Example 1 containing 1 wt% of ISDN had the best performance in terms of suppressing capacity decline at the initial cycling stage.

### Experimental Example 3. Performance evaluation of a combination of inorganic nitrate and organic nitrate 2

### [Preparation of electrolyte]

### Comparative Example 2

0.33 M lithium bis(fluorosulfonyl)imide (LiFSI, LiN(SO₂F)₂), 0.17 M lithium bis(pentafluoroethanesulfonyl)imide (LiBETI, LiN(SO₂C₂F₅)₂) and 6 wt% lithium nitrate (LiNO₃) were added to 1,2-dimethoxyethane (DME) and stirred for 12 hours, and 2-methylfuran (2-MeF) as a conjugated heterocyclic compound was added and stirred to prepare an electrolyte (DME:2-MeF=8:2 v/v).

### Example 4

0.33 M lithium bis(fluorosulfonyl)imide (LiFSI, LiN(SO₂F)₂), 0.17 M lithium bis(pentafluoroethanesulfonyl)imide (LiBETI, LiN(SO₂C₂F₅)₂), 6 wt% of lithium nitrate (LiNO₃) and 0.5 wt% of isosorbide dinitrate (ISDN) were added to 1,2-dimethoxyethane (DME) and stirred for 12 hours, and 2-methylfuran (2-MeF) as a conjugated heterocyclic compound was added and stirred to prepare an electrolyte (DME:2-MeF=8:2 v/v).

### Example 5

An electrolyte was prepared in the same way as Example 4, except that 1 wt% of isosorbide dinitrate (ISDN) was added.

TABLE 2 below summarizes the electrolyte composition of Comparative Example 2 and Examples 4 and 5.

**[TABLE 2]**

| | Non-aqueous solvent | First lithium salt | Second lithium salt | Inorganic nitrate | Organic nitrate |
|---|---|---|---|---|---|
| Comparative Example 2 | DME:2-MeF(8:2v/v) | LiFSI, 0.33M | LiBETI, 0.17 M | LiNO₃, 6 wt% | - |
| Example 4 | | | | | ISDN, 0.5 wt% |
| Example 5 | | | | | ISDN, 1 wt% |

### [Performance evaluation of lithium-sulfur battery]

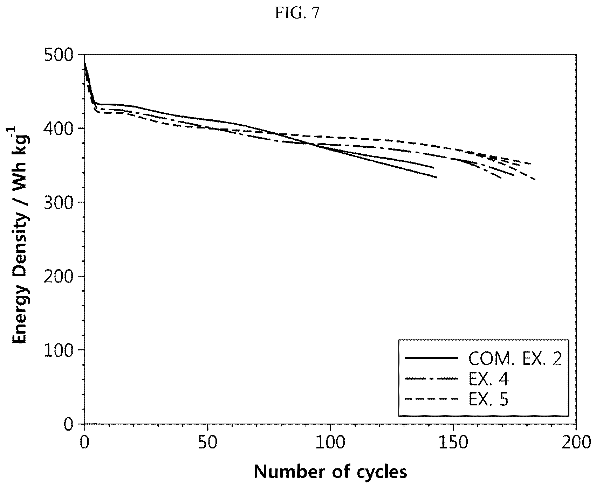

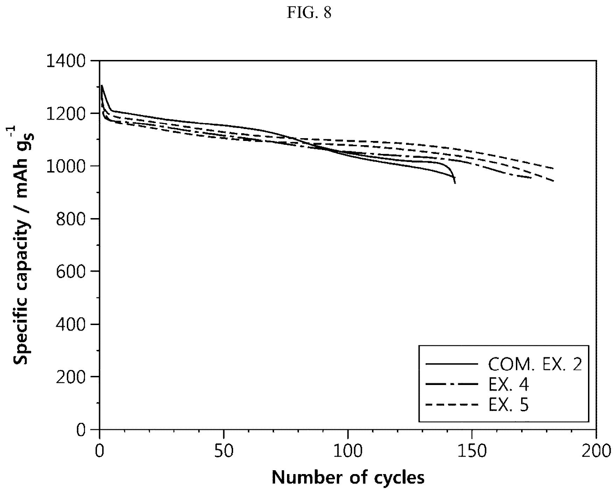

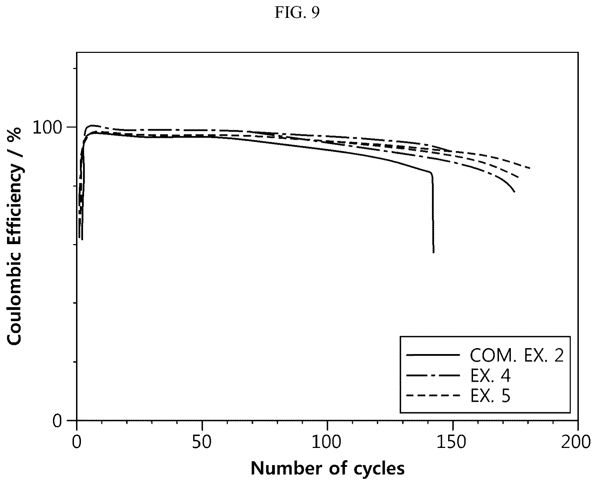

A lithium-sulfur battery was manufactured by the same method as the method described in Experimental Example 2, except that the electrolyte of each of Comparative Example 2 and Examples 4 and 5 was used, the loading amount of the positive electrode was 2.7 mAh/cm², and the thickness of the negative electrode was changed to 50 µm, and charging and discharging were performed by the same method as Experimental Example 1, and the results are shown in FIGS. 7 to 9 below.

Referring to the results of FIGS. 7 to 9, it was confirmed that the life of the batteries using the electrolytes of Examples 4 and 5 including 0.5 wt% and 1.0 wt% of ISDN, respectively was longer than Comparative Example 2 using LiNO₃ alone as the nitrate in the electrolyte.

### Experimental Example 4. Performance evaluation of electrolyte composition

### Example 6

An electrolyte was prepared in the same way as Example 1, except that the composition of the lithium salt was changed to 0.66 M lithium bis(fluorosulfonyl)imide (LiFSI, LiN(SO₂F)₂) and 0.34 M lithium bis(pentafluoroethanesulfonyl)imide (LiBETI, LiN(SO₂C₂F₅)₂).

### Example 7

An electrolyte was prepared in the same way as Example 1, except that the non-aqueous solvent composition was changed to DME:2-MeF=2:1 v/v ratio.

TABLE 3 below summarizes the electrolyte composition of Examples 6 and 7.

**[TABLE 3]**

| | Non-aqueous solvent | First lithium salt | Second lithium salt | Inorganic nitrate | Organic nitrate |
|---|---|---|---|---|---|
| Example 1 | DME:2-MeF(8:2v/v) | LiFSI, 0.33M | LiBETI, 0.17 M | LiNO₃, 5 wt% | ISDN, 1 wt% |
| Example 6 | DME:2-MeF(8:2v/v) | LiFSI, 0.66M | LiBETI, 0.34 M | | |
| Example 7 | DME:2-MeF(2:1v/v) | LiFSI, 0.33M | LiBETI, 0.17 M | | |

### [Performance evaluation of lithium-sulfur battery]

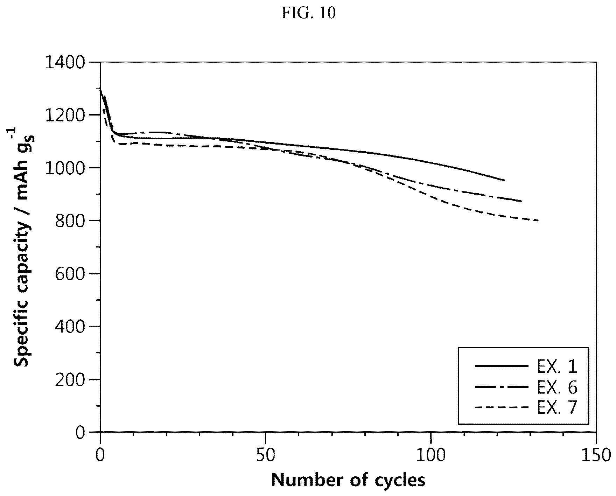

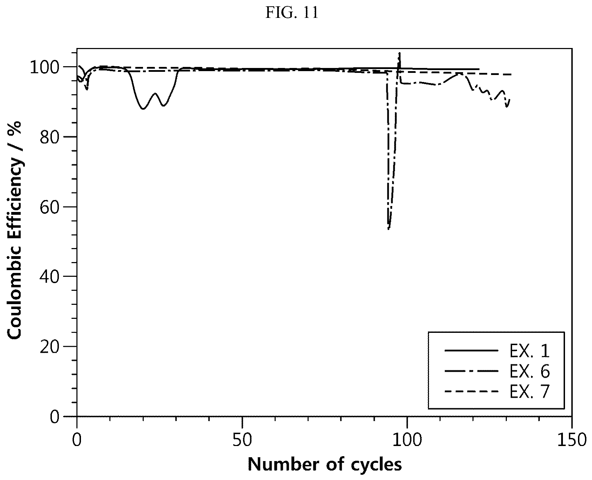

A lithium-sulfur battery was manufactured by the same method as the method described in Experimental Example 1, except that the electrolyte of each of Examples 1, 6 and 7 was used, the loading amount of the positive electrode was 2.7 mAh/cm², and the thickness of the negative electrode was changed to 50 µm, and charging and discharging were performed by the same method as Experimental Example 1, and the results are shown in FIGS. 10 and 11 below.

Referring to the results of FIGS. 10 and 11, it was confirmed that when inorganic nitrate and organic nitrate were used together as the nitrate, as the total concentration of the first lithium salt and the second lithium salt increases, performance improvement of the battery using the same was decreased (Example 1 vs Example 6). In addition, it was confirmed that when inorganic nitrate and organic nitrate were used together as the nitrate, as the ratio of the conjugated heterocyclic compound in the non-aqueous solvent composition increases, performance improvement of the battery using the same was decreased (Example 1 vs Example 7).

Through the experiment, it was confirmed that the lithium secondary battery, especially the lithium-sulfur battery using the electrolyte according to an embodiment of the present disclosure may have a significant life and Coulombic efficiency improvement effect.

## Claims

1. An electrolyte for a lithium-sulfur battery, comprising:
a non-aqueous solvent, a first lithium salt, a second lithium salt, an inorganic nitrate and an organic nitrate,
wherein the non-aqueous solvent includes an acyclic ether and a conjugated heterocyclic compound.

2. The electrolyte for the lithium-sulfur battery according to claim 1,
wherein the inorganic nitrate includes a monovalent nitrate, and
wherein the organic nitrate includes a divalent nitrate.

3. The electrolyte for the lithium-sulfur battery according to claim 1,
wherein the organic nitrate includes isosorbide dinitrate, 2,2,3,3-tetrafluorobutane-1,4-diol dinitrate, triethylene glycol dinitrate or a mixture thereof.

4. The electrolyte for the lithium-sulfur battery according to claim 1,
wherein the inorganic nitrate includes lithium nitrate (LiNO₃).

5. The electrolyte for the lithium-sulfur battery according to claim 1,
wherein the organic nitrate is included in an amount that is equal to or smaller than a weight of the inorganic nitrate.

6. The electrolyte for the lithium-sulfur battery according to claim 1,
wherein the acyclic ether is included in an amount of 70 vol% or more based on a total volume of the non-aqueous solvent.

7. The electrolyte for the lithium-sulfur battery according to claim 1,
wherein the first lithium salt includes a fluorine-containing inorganic lithium salt, and
wherein the second lithium salt includes a fluorine-containing organic lithium salt.

8. The electrolyte for the lithium-sulfur battery according to claim 1,
wherein a total concentration of the first lithium salt and the second lithium salt is equal to or less than 0.50 M.

9. The electrolyte for the lithium-sulfur battery according to claim 8,
wherein a molar concentration ratio of the first lithium salt and the second lithium salt ranges from 1:1 to 2:1.

10. A lithium-sulfur battery comprising:
the electrolyte for the lithium-sulfur battery according to any one of claims 1 to 9, a positive electrode, a negative electrode, a separator between the negative electrode and the positive electrode and a battery case,
wherein the positive electrode includes a sulfur-based compound containing a sulfur (S)-sulfur (S) bond as an active material, and
wherein the negative electrode includes a lithium metal layer.

11. The lithium-sulfur battery according to claim 10,
wherein the active material of the positive electrode includes a sulfur-carbon composite in which the sulfur-based compound is loaded into at least one of an outer surface of a porous carbon material and an inside of pores of the porous carbon material.

12. The lithium-sulfur battery according to claim 10,
wherein the lithium metal layer includes a lithium metal (Li) foil or a lithium alloy foil.

13. The lithium-sulfur battery according to claim 10,
wherein the negative electrode includes the lithium metal layer and a solid electrolyte interphase (SEI) on the lithium metal layer, and
wherein the solid electrolyte interphase contains nitrogen (N).

14. The lithium-sulfur battery according to claim 10,
wherein the lithium-sulfur battery includes a coin-type battery, a pouch-type battery or a cylindrical battery.
